# EUROPEAN PATENT APPLICATION

(11) **EP 4 779 085 A1**
(43) Date of publication of application: **22.07.2026**
(21) Application number: 24865032.7
(22) Date of filing: 25.06.2024
(51) Int. Cl.: E02F 9/00, B60K 11/04, F01P 3/20, F01P 5/10

(54) **COOLING SYSTEM FOR ELECTRIC CONSTRUCTION MACHINE, AND ELECTRIC CONSTRUCTION MACHINE INCLUDING SAME**

(30) Priority: 12.09.2023 JP 2023147934
(71) Applicant: KAWASAKI JUKOGYO KABUSHIKI KAISHA, Kobe-shi, Hyogo 650-8670 (JP)
(72) Inventor: NAKAMURA, Takanobu, Hyogo, 650-8670 (JP); IMAMURA, Yukito, Hyogo, 650-8670 (JP); ANADA, Tadashi, Hyogo, 650-8670 (JP); YOSHIMURA, Isamu, Hyogo, 650-8670 (JP); FUJII, Tomoyuki, Hyogo, 650-8670 (JP); TANAKA, Hiroshige, Hyogo, 650-8670 (JP)
(74) Representative: EIP
(86) International application number: PCT/JP2024/023046
(87) International publication number: WO 2025/057525

(57) **Abstract**

A cooling system for electric construction machines is a cooling system for an electric construction machine including an electric pump device that is driven by electric power supplied from a battery and includes a plurality of cooling devices that cool a plurality of targets to be cooled including the battery and the electric pump device. The plurality of cooling devices include at least one first cooling device and at least one second cooling device. The first cooling device and the second cooling device are disposed on one side and the other side of the battery in a first direction.

## Description

### Technical Field

The present disclosure relates to a cooling system for an electric construction machine including an electric pump device that is driven by electric power supplied from a battery, and to the electric construction machine including the cooling system.

### Background Art

Construction machines include a plurality of cooling devices such as a working fluid cooler and a radiator in order to cool a target to be cooled such as working oil. Known examples of such construction machines include the shovel disclosed in Patent Literature (PTL) 1.

### Citation List

### Patent Literature

PTL 1: Japanese Laid-Open Patent Application Publication No. 2021-063339

### Summary of Invention

### Technical Problem

The shovel disclosed in PTL 1, which is a power shovel, includes a battery chamber accommodating a battery in a rear space of a slewing body. Furthermore, in the slewing body, a main chamber is formed on the front right side of the battery chamber, and all the heat exchangers serving as cooling devices are housed in the main chamber. Therefore, it is likely that the weight distribution of the power shovel is heavily unbalanced toward the right side.

Thus, an object of the present disclosure is to provide a cooling system that can improve the weight balance of an electric construction machine.

### Solution to Problem

A cooling system for electric construction machines according to the present disclosure is a cooling system for an electric construction machine including an electric pump device that is driven by electric power supplied from a battery and includes a plurality of cooling devices that cool a plurality of targets to be cooled including the battery and the electric pump device. The plurality of cooling devices include at least one first cooling device and at least one second cooling device. The first cooling device and the second cooling device are disposed on one side and the other side of the battery in a first direction.

According to the present disclosure, the first cooling device and the second cooling device are disposed on one side and the other side of the battery in the first direction. Therefore, concentration of the cooling devices on one side of the battery in the first direction can be avoided. Accordingly, the weight balance of the electric construction machine in the first direction can be improved.

An electric construction machine according to the present disclosure includes: the aforementioned cooling system for the electric construction machine; a traveling device; a slewing body rotatably disposed on the traveling device; a boom pivotally disposed on the slewing body; the battery; and the electric pump device that is driven by the electric power supplied from the battery. The slewing body includes the cabin. The electric pump device is disposed within the slewing body on the one side in the first direction. The cabin is disposed on a side opposite the electric pump device, with the boom interposed therebetween. The battery is disposed on one side of the electric pump device and the cabin in a second direction perpendicular to the first direction.

According to this configuration, the electric pump device is disposed within the slewing body on the one side in the first direction. The cabin is disposed on the side opposite the electric pump device, with the boom interposed therebetween. The battery is disposed on the one side of the electric pump device and the cabin in the second direction perpendicular to the first direction. The working fluid cooler, the condenser, the inverter radiator, and the battery radiator are disposed on the opposite sides of the battery in the first direction. Accordingly, the weight balance of the electric construction machine can be improved.

### Advantageous Effects of Invention

According to the present disclosure, the weight balance of an electric construction machine can be improved.

The above object, other objects, features, and advantages of the present disclosure will be made clear by the following detailed explanation of preferred embodiments with reference to the attached drawings.

### Brief Description of Drawings

[Fig. 1] Fig. 1 is a perspective view of an excavator in which a cooling system according to an embodiment of the present disclosure is installed.
[Fig. 2] Fig. 2 is a schematic plan view of a cooling system installed in the excavator of Fig. 1.
[Fig. 3] Fig. 3 is a schematic side view of the cooling system of Fig. 2.

### Description of Embodiments

Hereinafter, a cooling system 1 according to an embodiment of the present disclosure and an electric construction machine 2 including the cooling system 1 will be described with reference to the aforementioned drawings. Note that the concept of directions mentioned in the following description is used for the sake of explanation; the orientations, etc., of elements according to the present disclosure are not limited to these directions. The cooling system 1 and the electric construction machine 2 described below are merely an embodiment of the present disclosure. Thus, the present disclosure is not limited to the embodiments and may be subject to addition, deletion, and alteration within the scope of the essence of the present disclosure.

### [Construction Machine]

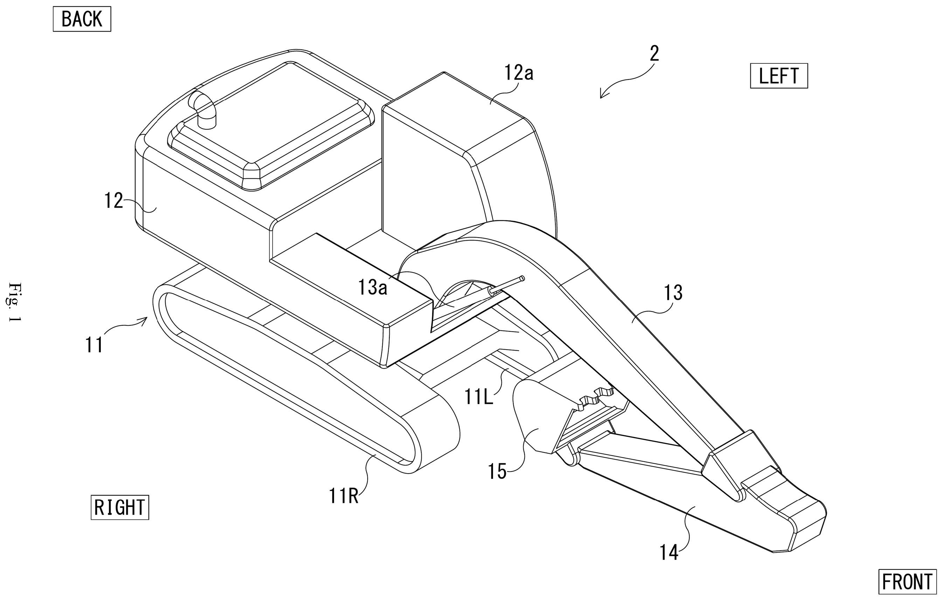

The electric construction machine 2 illustrated in Fig. 1 performs various tasks by moving attachments. The electric construction machine 2 is, for example, an electric excavator (hereinafter referred to simply as "the excavator") 2. Note that the electric construction machine 2 is not limited to the excavator 2 and may alternatively be a crane, a wheel loader, or the like. The excavator 2 includes a traveling device 11, a slewing body 12, a boom 13, an arm 14, and a bucket 15. The traveling device 11 includes, for example, a pair of crawlers 11L, 11R. Each of the crawlers 11L, 11R can be driven to move in various directions. The slewing body 12 is disposed on the traveling device 11 so as to be rotatable about a pivot axis extending in the vertical direction. The boom 13 is disposed on the slewing body 12 so as to be vertically pivotable. The arm 14 is disposed on a leading end portion of the boom 13 so as to be pivotable in the longitudinal direction. Furthermore, the bucket 15 is disposed on a leading end portion of the arm 14 so as to be pivotable in the longitudinal direction or the vertical direction. Note that the longitudinal direction is, for example, the direction in which the boom 13 extends.

Furthermore, hydraulic actuators such as a hydraulic motor and a cylinder are disposed in each of the traveling device 11, the slewing body 12, the boom 13, the arm 14, and the bucket 15. Specifically, a traveling hydraulic motor (not illustrated in the drawings) is disposed in each of the crawlers 11L, 11R of the traveling device 11. The traveling motor is supplied with working fluid to drive the crawlers 11L, 11R. This allows the traveling device 11 to move in various directions. Note that the working fluid is, for example, a liquid such as oil. A slewing hydraulic motor not illustrated in the drawings is disposed in the slewing body 12. When supplied with the working fluid, the slewing hydraulic motor causes the slewing body 12 to slew. A boom cylinder 13a is disposed on the boom 13. An arm cylinder and a bucket cylinder not illustrated in the drawings are disposed on the arm 14 and the bucket 15, respectively. When supplied with the working fluid, the boom cylinder 13a, the arm cylinder, and the bucket cylinder pivot the boom 13, the arm 14, and the bucket 15, respectively. Furthermore, the excavator 2 includes a hydraulic drive system 3 and the cooling system 1.

### [Hydraulic Drive System]

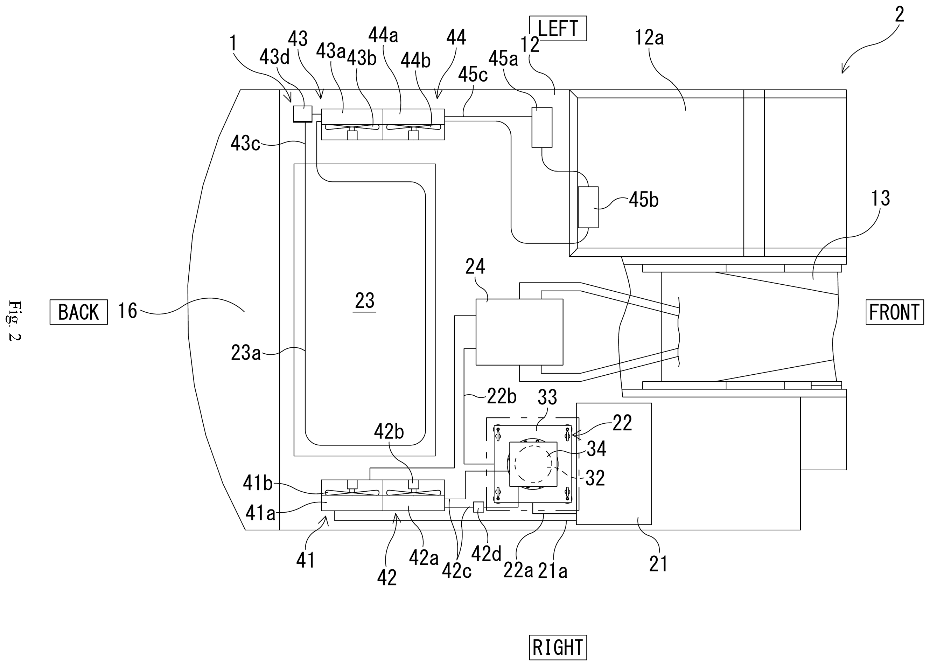

The hydraulic drive system 3 is disposed within the slewing body 12, as illustrated in Fig. 2. The hydraulic drive system 3 supplies the working fluid to each of the aforementioned hydraulic actuators to actuate the hydraulic actuator. Moreover, the hydraulic drive system 3 controls the flow (the flow rate and the flow direction) of the working fluid supplied to each of the hydraulic actuators to control the movement of the hydraulic actuator. The hydraulic drive system 3 configured as just described includes a tank 21, an electric pump device 22, and a battery 23, as illustrated in Fig. 2. More specifically, the hydraulic drive system 3 further includes a multi-control valve 24.

### [Tank]

The tank 21 stores the working fluid discharged from the electric pump device 22, which will be described in detail later. The working fluid in the tank 21 is sucked and discharged by the electric pump device 22 and then is supplied to each of the hydraulic actuators via the multi-control valve 24. Furthermore, the working fluid is brought back from each of the hydraulic actuators to the tank 21 via the multi-control valve 24. The tank 21 is disposed on the right side in the lateral direction, which is an example of the first direction (that is, one side in the first direction), in the slewing body 12. More specifically, the slewing body 12 includes a cabin 12a in which a driver (or an operator) can be seated. The boom 13 is disposed on the slewing body 12 as mentioned above; in the present embodiment, the boom 13 is disposed on the portion of the slewing body 12 that is located in the middle in the lateral direction, on one side in a second direction perpendicular to the first direction (which is the front side in the present embodiment). The cabin 12a is disposed on the front portion of slewing body 12 that is located on the left side (that is, the other side in the first direction) so as to adjoin the boom 13. The tank 21 is disposed on the side opposite the cabin 12a, with the boom 13 interposed therebetween. In other words, the tank 21 is disposed on the front portion of the slewing body 12 that is located on the right side so as to adjoin the boom 13.

### [Electric Pump Device]

The electric pump device 22 is an electric hydraulic pump device installed in the excavator 2. The electric pump device 22 is disposed adjacent to the tank 21 in the slewing body 12. More specifically, the electric pump device 22 is disposed rearward of the tank 21. In other words, the electric pump device 22 is disposed on the right side in the slewing body 12. Furthermore, the electric pump device 22 is electrically connected to the battery 23. Moreover, the electric pump device 22 is connected to the tank 21 via a suction pipe 22a, and is connected to the multi-control valve 24 via a discharge pipe 22b. The electric pump device 22 is driven by the electric current supplied from the battery 23. The electric pump device 22 is driven to draw the working fluid from the tank 21 through the suction pipe 22a. Furthermore, the electric pump device 22 is driven to discharge the working fluid to the multi-control valve 24 through the discharge pipe 22b.

More specifically, the electric pump device 22 includes a hydraulic pump 31 and an electric motor 32. The electric pump device 22 is what is called an upright electric pump device. Specifically, in the electric pump device 22, the hydraulic pump 31 and the electric motor 32 are disposed on the frame 33 so as to be aligned in the vertical direction, which is an example of the third direction. Note that the third direction is the direction perpendicular to the first and second directions.

The hydraulic pump 31 is rotatably driven to discharge the working fluid. In the present embodiment, the hydraulic pump 31 is a tandem pump composed of two swash plate pumps. Note that the hydraulic pump 31 is not limited to a tandem pump and may alternatively be a single pump. Furthermore, the hydraulic pump 31 is not limited to a swash plate pump and may alternatively be an axial piston pump or a gear pump. The hydraulic pump 31 is connected to the tank 21 via the suction pipe 22a, and is connected to the multi-control valve 24 via the discharge pipe 22b.

The electric motor 32 rotatably drives the hydraulic pump 31, causing the hydraulic pump 31 to discharge the working fluid. The electric motor 32 is, for example, a three-phase alternating current motor. Note that the electric motor 32 may alternatively be a direct current motor. The electric motor 32 is formed, for example, in the shape of a circular column, and disposed coaxially with the hydraulic pump 31. Note that the electric motor 32 does not necessarily need to be aligned in a straight line with the hydraulic pump 31; for example, the electric motor 32 and the hydraulic pump 31 may be positioned parallel to each other with offset axes or may be positioned so that the axis of the electric motor 32 intersects the hydraulic pump 31 diagonally or at a right angle.

The electric pump device 22 further includes an inverter 34. The inverter 34 converts a direct current into an alternating current. The inverter 34 is electrically connected to the electric motor 32 and the battery 23 to be described later. The inverter 34 converts the direct current supplied from the battery 23 into an alternating current and provides the alternating current to the electric motor 32. With this, the electric motor 32 rotatably drives the hydraulic pump 31. The inverter 34 is disposed, for example, integrally on the electric motor 32. In the present embodiment, the inverter 34 is disposed on the electric motor 32 so as to be positioned on the side opposite the hydraulic pump 31 in the vertical direction.

### [Multi-control Valve]

The multi-control valve 24 supplies the working fluid discharged from the electric pump device 22 to each of the hydraulic actuators, and controls the flow of the working fluid supplied. More specifically, the multi-control valve 24 is connected to the hydraulic pump 31 of the electric pump device 22 via the discharge pipe 22b as mentioned above. The multi-control valve 24 configured as just described is located rearward of the boom 13 in the slewing body 12. In the present embodiment, the multi-control valve 24 is located adjacent to the electric pump device 22 in the slewing body 12.

### [Battery]

The battery 23 is electrically connected to the electric pump device 22 (more specifically, the inverter 34). The battery 23 supplies a direct current to the inverter 34. The battery 23 is disposed within the slewing body 12. More specifically, the battery 23 is positioned rearward of the electric pump device 22 in the slewing body 12. In the present embodiment, a counterweight 16 is disposed at the internal tail end of the slewing body 12. The battery 23 is disposed between the counterweight 16 and the electric pump device 22. The battery 23 is disposed within the slewing body 12 with spacing on both the left and right sides, between the counterweight 16 and the electric pump device 22.

### [Cooling System]

The cooling system 1 is a system that cools a plurality of targets to be cooled in the excavator 2. The cooling system 1 includes a plurality of cooling devices 41 to 44. In the present embodiment, the targets to be cooled include the working fluid, the electric motor 32, the inverter 34, the battery 23, and the interior of the cabin 12a. The cooling system 1 includes four cooling devices 41 to 44, specifically: a working fluid cooler 41, an electric motor radiator 42, a battery radiator 43, and an air condenser 44. Note that said targets to be cooled are an example; the targets to be cooled do not necessarily need to be all of the working fluid, the inverter 34, the battery 23, and the interior of the cabin 12a. For example, it is sufficient that the targets to be cooled by said cooling system 1 be at least two of those four elements. Furthermore, the targets to be cooled may be other than said four elements. Hereinafter, each element of the cooling system 1 will be described in more detail.

The working fluid cooler 41 cools the working fluid returning to the tank 21. In the present embodiment, the working fluid cooler 41 cools the working fluid returning from the hydraulic actuator to the tank 21 via the multi-control valve 24. The working fluid cooler 41 includes a cooler core 41a and a cooler fan 41b. The cooler core 41a, which is what is called a heat exchanger, is interposed in a tank pipe 21a connecting the multi-control valve 24 and the tank 21, for example. The cooler core 41a passes the working fluid therethrough to effect heat exchange between the working fluid and the air around the cooler core 41a, thereby cooling the working fluid. The cooler fan 41b directs air toward the cooler core 41a to enhance the cooling of the working fluid.

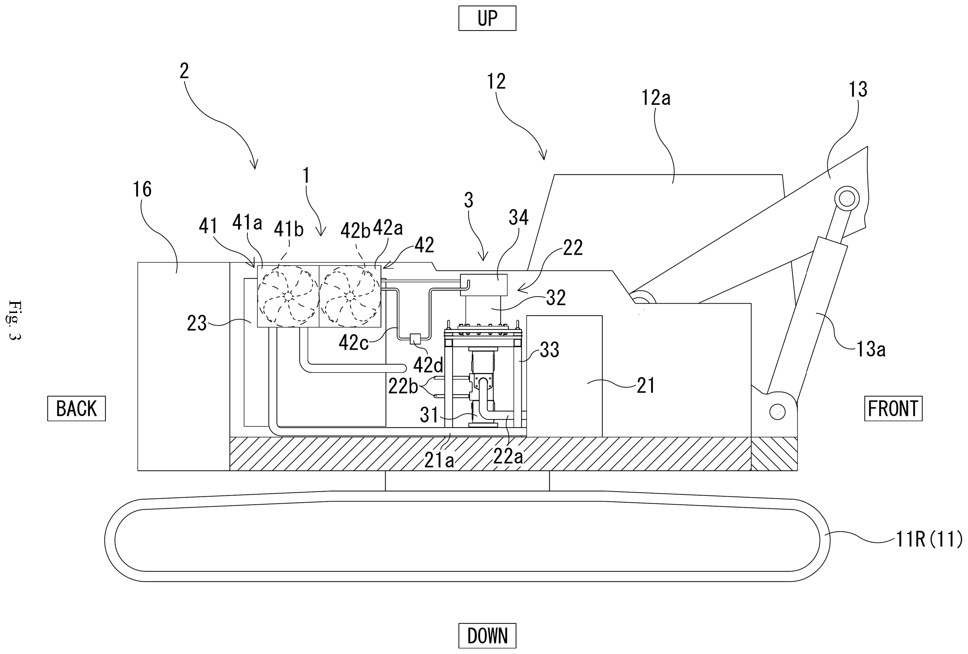

A coolant for cooling the electric motor 32 flows through the electric motor radiator 42. More specifically, a coolant for cooling the electric motor 32 and the inverter 34 flows through the electric motor radiator 42. The electric motor radiator 42 includes a radiator core 42a and a cooling fan 42b, as illustrated in Fig. 3. The radiator core 42a, which is what is called a heat exchanger, is connected to the inverter 34 via a pipe 42c. More specifically, a fluid passage not illustrated in the drawings is formed in the inverter 34. Furthermore, a fluid passage not illustrated in the drawings is formed in the electric motor 32 as well; the fluid passages in the electric motor 32 and the inverter 34 are connected to each other. The radiator core 42a is connected to the fluid passage of the inverter 34 via the pipe 42c. Furthermore, a circulation pump 42d is disposed on the pipe 42c, meaning that the circulation pump 42d circulates the coolant between the radiator core 42a and the fluid passages of the electric motor 32 and the inverter 34. The radiator core 42a passes the circulating coolant therethrough to effect heat exchange between the coolant and the air around the radiator core 42a, thereby cooling the coolant. The electric motor 32 and the inverter 34 are cooled by the cooled coolant flowing through the fluid passages. The cooling fan 42b directs air toward the radiator core 42a to enhance the cooling of the coolant.

The battery radiator 43 illustrated in Fig. 2 cools the battery 23 with the coolant. The battery radiator 43 includes a radiator core 43a and a cooling fan 43b. The radiator core 43a, which is what is called a heat exchanger, is connected to the battery 23 via a pipe 43c. More specifically, a fluid passage 23a is formed in the casing of the battery 23. The radiator core 43a is connected to the fluid passage 23a of the battery 23 via the pipe 43c. A circulation pump 43d is disposed on the pipe 43c. The circulation pump 43d circulates the coolant between the radiator core 43a and the fluid passage 23a. The radiator core 43a passes the circulating coolant therethrough to effect heat exchange between the coolant and the air around the radiator core 43a, thereby cooling the coolant. The battery 23 is cooled by the cooled coolant flowing through the fluid passage 23a. The cooling fan 43b directs air to the radiator core 43a to enhance the cooling of the coolant.

The air condenser 44 is included in an air conditioner 45 that cools the interior of the cabin 12a, and cools a refrigerant (for example, a cooling gas) that circulates in the air conditioner 45. More specifically, the air conditioner 45, which is an example of cooling equipment, includes a compressor 45a, the air condenser 44, and an evaporator 45b. The compressor 45a compresses a refrigerant gas and delivers the refrigerant gas to the air condenser 44. The air condenser 44 includes a condenser core 44a and a condenser fan 44b. The refrigerant compressed and delivered by the compressor 45a is brought to the condenser core 44a. The condenser core 44a passes the compressed and delivered refrigerant gas therethrough to effect heat exchange between the refrigerant gas and the air around the condenser core 44a, thereby cooling the coolant. The condenser fan 44b directs air toward the condenser core 44a to enhance the cooling of the refrigerant. The refrigerant cooled by the condenser core 44a is atomized and supplied to the evaporator 45b using a vaporizer not illustrated in the drawings. Consequently, the refrigerant vaporizes, and the evaporator 45b is cooled. Cool air can be generated by passing air from a blower fan, which is not illustrated in the drawings, through the cooled evaporator 45b. With this, the interior of the cabin 12a can be cooled. Furthermore, the evaporator 45b passes air therethrough from the blower fan and thus, the refrigerant is heated. The heated refrigerant is delivered to the compressor 45a. Subsequently, the refrigerant is compressed and then delivered from the compressor 45a to the air condenser 44 again. Thus, the refrigerant repeatedly absorbs and dissipates heat while circulating within the air conditioner 45, and cools the evaporator 45b, thereby allowing the interior of the cabin 12a to be cooled.

### [Arrangement of Cooling Devices]

In the cooling system 1 configured as described above, the cooling devices 41 to 44 are arranged in the excavator 2 (in the present embodiment, within the slewing body 12) as follows. Specifically, in the cooling system 1, the first cooling devices 41, 42, namely, the working fluid cooler 41 and the electric motor radiator 42, are disposed on the right side of the battery 23. Meanwhile, the second cooling devices 43, 44, namely, the battery radiator 43 and the air condenser 44, are disposed on the left side of the battery 23. In this manner, the four cooling devices 41 to 44 are arranged such that the battery 23 is interposed therebetween in the lateral direction. Therefore, the lateral weight balance of the excavator 2 can be improved.

More specifically, the working fluid cooler 41 is disposed rearward of the tank 21, which is located on the right side in the slewing body 12. Therefore, the portion of the tank pipe 21a that connects the tank 21 and the working fluid cooler 41 can be prevented from becoming long. The electric motor radiator 42 is disposed rearward of the electric pump device 22, which is located on the right side. In the present embodiment, the electric motor radiator 42 is disposed adjacent to the working fluid cooler 41 and is aligned therewith in the longitudinal direction. The electric motor radiator 42 is disposed forward of the working fluid cooler 41. Therefore, the pipe 42c connecting the electric motor radiator 42 and the inverter 34 can be prevented from becoming long.

The battery radiator 43 is disposed on the left side in the slewing body 12. Therefore, the pipe 43c connecting the radiator core 43a and the battery 23 can be prevented from becoming long. Note that in the present embodiment, the battery radiator 43 is disposed rearward of the cabin 12a. Furthermore, the air condenser 44 is disposed on the left side, rearward of the cabin 12a. In the present embodiment, the air condenser 44 is disposed adjacent to the battery radiator 43 and is aligned therewith in the longitudinal direction. The air condenser 44 is disposed forward of the battery radiator 43. Therefore, a pipe 45c connecting the air condenser 44 and the evaporator 45b can be prevented from becoming long.

In the cooling system 1 according to the present embodiment, the first cooling devices 41, 42 and the second cooling devices 43, 44 are disposed on the laterally opposite sides of the battery 23. Therefore, concentration of the cooling devices 41 to 44 on a single lateral side of the battery 23 can be avoided. This allows for improved lateral weight balance of the excavator 2.

Furthermore, in the cooling system 1 according to the present embodiment, the two first cooling devices 41, 42 include the working fluid cooler 41 which cools the working fluid returning to the tank 21. Therefore, the portion of the tank pipe 21a that connects the working fluid cooler 41 and the tank 21 can be prevented from becoming long.

Furthermore, in the cooling system 1 according to the present embodiment, the two second cooling devices 43, 44 include the air condenser 44 of the air conditioner 45 which cools the interior of the cabin 12a. Therefore, the pipe 45c of the air conditioner 45 that connects the evaporator 45b and the air condenser 44 can be prevented from becoming long.

Furthermore, in the cooling system 1 according to the present embodiment, the two first cooling devices 41, 42 include the electric motor radiator 42 through which the refrigerant for cooling the inverter 34 flows. Therefore, the pipe 42c connecting the inverter 34 and the electric motor radiator 42 can be prevented from becoming long.

Furthermore, in the cooling system 1 according to the present embodiment, the two second cooling devices 43, 44 include the battery radiator 43 through which the refrigerant for cooling the battery 23 flows. Therefore, the pipe 43c connecting the battery 23 and the battery radiator 43 can be prevented from becoming long.

Furthermore, in the cooling system 1 according to the present embodiment, the two first cooling devices 41, 42 include the working fluid cooler 41 and the electric motor radiator 42. The two second cooling devices 43, 44 include the air condenser 44 of the air conditioner 45 and the battery radiator 43. Therefore, the working fluid cooler 41, the electric motor radiator 42, the air condenser 44, and the battery radiator 43 of the excavator 2 can be arranged in a balanced configuration on the laterally opposite sides of the battery 23. Furthermore, the working fluid cooler 41, the electric motor radiator 42, the air condenser 44, and the battery radiator 43 can be positioned near the targets to be cooled. Therefore, the pipes 21a, 42c, 43c, 45c can be prevented from becoming long.

In the excavator 2 according to the present embodiment, the electric pump device 22 is disposed on the right side in the slewing body 12. The cabin 12a is disposed on the side opposite the electric pump device 22, with the boom 13 interposed therebetween; in other words, the cabin 12a is disposed on the left side. The battery 23 is disposed rearward of the electric pump device 22 and the cabin 12a. The working fluid cooler 41, the electric motor radiator 42, the air condenser 44, and the battery radiator 43 are disposed on the laterally opposite sides of the battery 23. Therefore, the weight balance of the excavator 2 can be improved.

### <Other Embodiments>

While the present embodiment describes the excavator 2 as an example of an electric construction machine equipped with the cooling system 1, the electric construction machine may alternatively be a crane, a bulldozer, or a wheel loader. Similarly, the targets to be cooled may be other than those indicated above. In the cooling system 1, the coolant from the electric motor radiator 42 flows not only through the electric motor 32, but also through the inverter 34 as the coolant for cooling the inverter 34. In the cooling system, an inverter radiator may also be provided to pass the coolant through the inverter 34, separately from the radiator for the electric motor 32. At this time, the cooling system 1 includes, as the first cooling devices, an electric motor radiator and a pump radiator serving as a radiator for pump devices. The plurality of first cooling devices 41, 42 do not necessarily need to be arranged in the longitudinal direction and may alternatively be arranged in the vertical direction or in a staggered configuration. The same applies to the plurality of second cooling devices 43, 44. The first cooling devices and the second cooling devices may each consist of a single cooling device. The battery radiator 43 does not necessarily need to be disposed on the left side and may be disposed on the right side. The number of first cooling devices and the number of second cooling devices do not necessarily need to be equal; one of the respective quantities may be greater than the other. Furthermore, in the present embodiment, the electric pump device 22 is an upright electric pump device in which the hydraulic pump 31 and the electric motor 32 are arranged in the vertical direction; however, the electric motor device 22 may alternatively be a horizontal electric pump device in which the hydraulic pump 31 and the electric motor 32 are arranged in the lateral or longitudinal direction, for example.

### <Exemplary Embodiments>

A cooling system for electric construction machines according to the first aspect is a cooling system for an electric construction machine including an electric pump device that is driven by electric power supplied from a battery and includes a plurality of cooling devices that cool a plurality of targets to be cooled including the battery and the electric pump device. The plurality of cooling devices include at least one first cooling device and at least one second cooling device. The first cooling device and the second cooling device are disposed on one side and the other side of the battery in a first direction.

According to this aspect, the first cooling device and the second cooling device are disposed on one side and the other side of the battery in the first direction. Therefore, concentration of the cooling devices on one side of the battery in the first direction can be avoided. Accordingly, the weight balance of the electric construction machine in the first direction can be improved.

A cooling system for electric construction machines according to the second aspect is the cooling system for electric construction machines according to the first aspect in which, in the electric construction machine, a tank that stores working fluid discharged from the electric pump device is disposed on the one side in the first direction, and at least one first cooling device includes a working fluid cooler that cools the working fluid returning to the tank.

According to this aspect, at least one first cooling device includes the working fluid cooler that cools the working fluid returning to the tank. Therefore, the pipe that connects the working fluid cooler and the tank can be prevented from becoming long.

A cooling system for electric construction machines according to the third aspect is the cooling system for electric construction machines according to the first or second aspect in which, in the electric construction machine, the electric pump device is disposed on the one side in the first direction, and a cabin is disposed on the other side in the first direction, and at least one second cooling device includes a condenser of cooling equipment that cools an interior of the cabin.

According to this aspect, at least one second cooling device includes the condenser of the cooling equipment that cools the interior of the cabin. Therefore, the pipe of the cooling equipment that connects the evaporator and the condenser can be prevented from becoming long.

A cooling system for electric construction machines according to the fourth aspect is the cooling system for electric construction machines according to any one of the first to third aspects in which, in the electric construction machine, the electric pump device is disposed on the one side in the first direction, the electric pump device includes: a hydraulic pump that discharges working fluid; and an electric motor that drives the hydraulic pump, and at least one first cooling device includes an electric motor radiator through which a refrigerant for cooling the electric motor flows.

According to this aspect, at least one first cooling device includes the electric motor radiator. Therefore, the pipe connecting the electric motor and the electric motor radiator can be prevented from becoming long.

A cooling system for electric construction machines according to the fifth aspect is the cooling system for electric construction machines according to the fourth aspect in which the electric motor pump device further includes an inverter connected to the battery and the electric motor, and the refrigerant for cooling the electric motor and the inverter flows through the electric motor radiator.

According to this aspect, the refrigerant for cooling the electric motor and the inverter flows through the electric motor radiator. Therefore, the inverter can be cooled together with the electric motor.

A cooling system for electric construction machines according to the sixth aspect is the cooling system for electric construction machines according to any one of the first to fifth aspects in which at least one second cooling device includes a battery radiator through which a refrigerant for cooling the battery flows.

According to this aspect, at least one second cooling device includes the battery radiator through which the refrigerant for cooling the battery flows. Therefore, the pipe connecting the battery and the battery radiator can be prevented from becoming long.

A cooling system for electric construction machines according to the seventh aspect is the cooling system for electric construction machines according to the second aspect in which, in the electric construction machine, the electric pump device is disposed on the one side in the first direction, and a cabin is disposed on the other side in the first direction, at least one first cooling device includes a pump device radiator through which a refrigerant for cooling the electric pump device flows, and at least one second cooling device includes: a condenser of cooling equipment that cools an interior of the cabin; and a battery radiator through which a refrigerant for cooling the battery flows.

According to this aspect, at least one first cooling device includes the pump device radiator. At least one second cooling device includes the condenser of the cooling equipment and the battery radiator. Therefore, the working fluid cooler, the pump device radiator, the condenser, and the battery radiator of the electric construction machine can be arranged in a balanced configuration on the opposite sides of the battery in the first direction. Furthermore, the working fluid cooler, the pump device radiator, the condenser, and the battery radiator can be positioned near the targets to be cooled and therefore, the respective pipes thereof can be prevented from becoming long.

An excavator according to the eighth aspect includes: the cooling system for the electric construction machine according to any one of the first to seventh aspects; a traveling device; a slewing body rotatably disposed on the traveling device; a boom pivotally disposed on the slewing body; the battery; and the electric pump device that is driven by the electric power supplied from the battery. The slewing body includes the cabin. The electric pump device is disposed within the slewing body on the one side in the first direction. The cabin is disposed on a side opposite the electric pump device, with the boom interposed therebetween. The battery is disposed on one side of the electric pump device and the cabin in a second direction perpendicular to the first direction.

According to this aspect, the electric pump device is disposed within the slewing body on the one side in the first direction. The cabin is disposed on the side opposite the electric pump device, with the boom interposed therebetween. The battery is disposed on the one side of the electric pump device and the cabin in the second direction perpendicular to the first direction. The working fluid cooler, the condenser, the inverter radiator, and the battery radiator are disposed on the opposite sides of the battery in the first direction. Accordingly, the weight balance of the electric construction machine can be improved.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

## Claims

1. A cooling system for an electric construction machine including an electric pump device that is driven by electric power supplied from a battery, the cooling system comprising:
a plurality of cooling devices that cool a plurality of targets to be cooled including the battery and the electric pump device, wherein
the plurality of cooling devices include at least one first cooling device and at least one second cooling device, and
the at least one first cooling device and the at least one second cooling device are disposed on one side and the other side of the battery in a first direction.

2. The cooling system for the electric construction machine according to claim 1, wherein
in the electric construction machine, a tank that stores working fluid discharged from the electric pump device is disposed on the one side in the first direction, and
the at least one first cooling device includes a working fluid cooler that cools the working fluid returning to the tank.

3. The cooling system for the electric construction machine according to claim 1, wherein
in the electric construction machine, the electric pump device is disposed on the one side in the first direction, and a cabin is disposed on the other side in the first direction, and
the at least one second cooling device includes a condenser of cooling equipment that cools an interior of the cabin.

4. The cooling system for the electric construction machine according to claim 1, wherein
in the electric construction machine, the electric pump device is disposed on the one side in the first direction,
the electric pump device includes: a hydraulic pump that discharges working fluid; and an electric motor that drives the hydraulic pump, and
the at least one first cooling device includes an electric motor radiator through which a refrigerant for cooling the electric motor flows.

5. The cooling system for the electric construction machine according to claim 4, wherein
the electric motor pump device further includes an inverter connected to the battery and the electric motor, and
the refrigerant for cooling the electric motor and the inverter flows through the electric motor radiator.

6. The cooling system for the electric construction machine according to claim 1, wherein
the at least one second cooling device includes a battery radiator through which a refrigerant for cooling the battery flows.

7. The cooling system for the electric construction machine according to claim 2, wherein
in the electric construction machine, the electric pump device is disposed on the one side in the first direction, and a cabin is disposed on the other side in the first direction,
the at least one first cooling device includes a pump device radiator through which a refrigerant for cooling the electric pump device flows, and
the at least one second cooling device includes: a condenser of cooling equipment that cools an interior of the cabin; and a battery radiator through which a refrigerant for cooling the battery flows.

8. An electric construction machine comprising:
the cooling system for the electric construction machine according to claim 7;
a traveling device;
a slewing body rotatably disposed on the traveling device;
a boom pivotally disposed on the slewing body;
the battery; and
the electric pump device that is driven by the electric power supplied from the battery, wherein
the slewing body includes the cabin,
the electric pump device is disposed within the slewing body on the one side in the first direction,
the cabin is disposed on a side opposite the electric pump device, with the boom interposed therebetween, and
the battery is disposed on one side of the electric pump device and the cabin in a second direction perpendicular to the first direction.
